# EUROPEAN PATENT SPECIFICATION

(11) **EP 3 345 114 B1**
(45) Date of publication and mention of the grant of the patent: **14.10.2020**
(21) Application number: 16816065.3
(22) Date of filing: 28.11.2016
(51) Int. Cl.: G06F 21/55, G06F 21/56

(54) **DISABLING MALICIOUS BROWSER EXTENSIONS**
DEAKTIVIERUNG VON BÖSARTIGEN BROWSER-ERWEITERUNGEN
DÉSACTIVATION D'EXTENSIONS DE NAVIGATEUR MALVEILLANT

(30) Priority: 06.06.2016 US 201615173778
(43) Date of publication of application: 11.07.2018
(73) Proprietor: Google LLC, Mountain View, CA 94043 (US)
(72) Inventor: GORDON, Harrison Mark, Mountain View, California 94043 (US); BURRIESCI, Matthew Strecker, Mountain View, California 94043 (US); HALPIN, William M., JR., Mountain View, California 94043 (US)
(74) Representative: Kilburn & Strode LLP
(86) International application number: PCT/US2016/063862
(87) International publication number: WO 2017/213688

(56) References cited:
- US-B1- 9 178 904
- MIKE TER LOUW ET AL: "Enhancing web browser security against malware extensions", JOURNAL IN COMPUTER VIROLOGY, vol. 4, no. 3, 1 August 2008 (2008-08-01), pages 179-195, XP055030300, ISSN: 1772-9890, DOI: 10.1007/s11416-007-0078-5
- SHAHRIAR HOSSAIN ET AL: "Effective detection of vulnerable and malicious browser extensions", COMPUTERS & SECURITY, ELSEVIER SCIENCE PUBLISHERS. AMSTERDAM, NL, vol. 47, 19 June 2014 (2014-06-19), pages 66-84, XP029074974, ISSN: 0167-4048, DOI: 10.1016/J.COSE.2014.06.005

## Description

### TECHNICAL FIELD

This document generally relates to automated identification and disablement of malicious and unwanted computer extensions.

### BACKGROUND

The Internet facilitates the exchange of information and transactions between users across the globe. Computing systems employ web browsers to present content to users. A user may intentionally or inadvertently install software on a computer, and that software can alter the presentation of information presented by the browser or otherwise alter the operation of the browser or the interactions of the browser with the computer on which it is installed or with remote computing systems. Software that alters the operation of a browser can be referred to as a "browser extension" that is installed on the browser.

US9178904 discloses a computer-implemented method for detecting malicious browser-based scripts including (1) identifying an attempt by a web browser to access sensitive information stored on a server, (2) identifying a web browser script installed in the web browser, (3) calculating a signature hash for the web browser script, (4) querying, using the signature hash, a browser script signature database that associates web browser script signature hashes with script security indicators, (5) receiving, in response to querying the browser script signature database, a script security indicator associated with the signature hash, and (6) applying, based on the script security indicator associated with the web browser script, a script security policy associated with the web browser script.

MIKE TER LOUW ET AL, "Enhancing web browser security against malware extensions" JOURNAL IN COMPUTER VIROLOGY, (20080801), vol. 4, no. 3 discloses security issues of functionality extension mechanisms supported by web browsers. Extensions (or "plug-ins") in modern web browsers enjoy unrestrained access at all times and thus are attractive vectors for malware. The document discloses a malware application for the popular Firefox web browser and discusses techniques for runtime monitoring of extension behavior to provide a foundation for defending threats posed by installed extensions.

### SUMMARY

This document describes techniques, methods, systems, and other mechanisms for automatically identifying and disabling malicious or otherwise unwanted or undesirable browser extensions, referred to collectively as rogue extensions. In general, a browser extension manager installed on a computing device can identify one or more browser extensions installed on a browser of the computing device as being malicious browser extensions using one or more of a variety of techniques for identifying a malicious browser extension, as discussed below. The extension manager can automatically disable identified malicious browser extensions (e.g., by deactivating, uninstalling, or restricting access of the identified malicious browser extensions). Upon completion of disabling of the malicious browser extensions, the extension manager can automatically uninstall itself from the computing device.

In general, one innovative aspect of the subject matter described in this specification can be embodied in a method comprising identifying, by an extension manager, that a browser extension that is installed on a computing device is configured to modify the operation of a browser application; determining that the browser extension is a malicious browser extension based on a manner that the browser extension modifies content presented within the browser application; disabling the browser extension in response to determining that the browser extension is a malicious browser extension, wherein disabling the browser extension prevents the browser extension from modifying content presented within the browser application; and initiating an uninstall process that uninstalls the extension manager from the computing device upon completion of disabling of the browser extension.

These and other embodiments can each optionally include one or more of the following features. The extension manager can be further configured to provide, within a user interface presented at the computing device, a visual display of text or graphical information identifying the browser extension as a malicious browser extension. The computing device can include a user input device for receiving user input requesting that the browser extension be disabled in response to display of the text or graphical information identifying the browser extension as a malicious browser extensions. The extension manager can disable the browser extension in response to receiving, through the user input device, the user input requesting that the browser extension be disabled. Disabling the browser extension can include uninstalling the browser extension.

Determining that the browser extension is a malicious browser extension can include accessing a memory device storing a list of malicious browser extensions that have been previously identified as browser extensions that modify content presented within browser applications, and determining that the browser extension is included in the list of malicious browser extensions stored in the memory device. Determining that the browser extension is a malicious browser extension can include determining that the browser extension inserts unauthorized content into a display of primary content that is obtained from a given network location and displayed within the browser application, wherein the unauthorized content is obtained from a different network location than the given network location of the primary content. Determining that the browser extension is a malicious browser extension can include determining that the browser extension blocks display of authorized content obtained by the computing device for display by the browser application, wherein the authorized content is one of primary content included in a given webpage requested by the browser application or third-party content that is requested by the browser application through execution of code of the given webpage. Determining that the browser extension is a malicious browser extension can include determining that the browser extension is a fourth-party search bar extension that displays a search bar as part of the display of the browser application. Determining that the browser extension is a malicious browser extension can include determining that the browser extension communicates with outside servers independent of a request from the user or through execution of code included in a given webpage that was requested by the user for such communications.

It will be appreciated that aspects can be implemented in any convenient form. For example, aspects may be implemented by appropriate computer programs which may be carried on appropriate carrier media which may be tangible carrier media (e.g. disks) or intangible carrier media (e.g. communications signals). Aspects may also be implemented using suitable apparatus which may take the form of programmable computers running computer programs arranged to implement the invention. Aspects can be combined such that features described in the context of one aspect may be implemented in another aspect.

Particular implementations can, in certain instances, realize one or more of the following advantages. Malicious browser extensions can be easily identified and removed by non-sophisticated users with minimal or no user input. User web browsing experience can be improved by automatically identifying and removing malicious browser extensions that restrict access to desired content, inject unwanted content, or slow down system performance. Privacy is protected by removing malicious browser extensions that could potentially access sensitive information (e.g., browsing history, financial information) and provide the sensitive information to outside computing systems. Computing resources can be preserved due to automatic uninstallation of the extension manager. Implementations may therefore address problems associated with efficient removal of malicious browser extensions.

The details of one or more implementations are set forth in the accompanying drawings and the description below. Other features, objects, and advantages will be apparent from the description and drawings, and from the claims.

### DESCRIPTION OF DRAWINGS

FIG. 1 is a conceptual diagram of a system that may be used to implement the systems and methods described in this document.
FIG. 2 shows an example webpage displayed in a browser containing primary content, third party content, and unwanted fourth party content.
FIG. 3 shows an example extension manager dialog displayed over the example webpage of FIG. 2.
FIG. 4 is a flow chart of an example process for identifying and disabling malicious browser extensions.
FIG. 5 is a block diagram of an example computer system.

Like reference symbols in the various drawings indicate like elements.

### DETAILED DESCRIPTION

This document generally describes systems and methods for identifying and disabling malicious browser extensions. Malicious browser extensions are browser extensions that alter the performance of a web browser in undesirable ways. For example, a content blocker type malicious browser extension can block or otherwise restrict access to desired content that a user wishes to view. For example, a content blocker type malicious browser extension can prevent a browser from loading additional third party content (e.g., videos, audio content, images, etc.) requested by a webpage for display along with primary content of the webpage. As another example, content injector type malicious browser extensions can inject unwanted content provided by a fourth party content provider that has not been requested in response to execution of code in a webpage requested by the user. As yet another example, a phishing type malicious browser extension may attempt to elicit a user to enter sensitive or personal information (e.g., credit card information) that can be used to steal the user's identity or steal from the user by making unauthorized charges to the user's credit card.

A browser extension manager can be installed on a user's device and use various techniques to automatically identify malicious browser extensions, disable the malicious browser extensions, and then automatically uninstall itself from the user's computing device. The extension manager can, for example, identify that a browser extension installed in a browser on a computing device is a malicious browser extension by comparing information for the browser extension to information contained in a database of previously identified malicious browser extensions. The extension manager can then disable the malicious browser extension by deactivating the malicious browser extension, uninstalling the malicious browser extension, or restricting the browser extensions from altering actions of the browser. In some implementations, the extension manager provides the user with a list of identified potentially malicious browser extensions and allows the user to select malicious browser extensions to be disabled. In some implementations, after the extension manager has identified all identified malicious browser extensions, the extension manager automatically uninstalls itself from the user's computing device. In some implementations, the extension manager can be a browser extension that is installed on the browser running on the user's computing device.

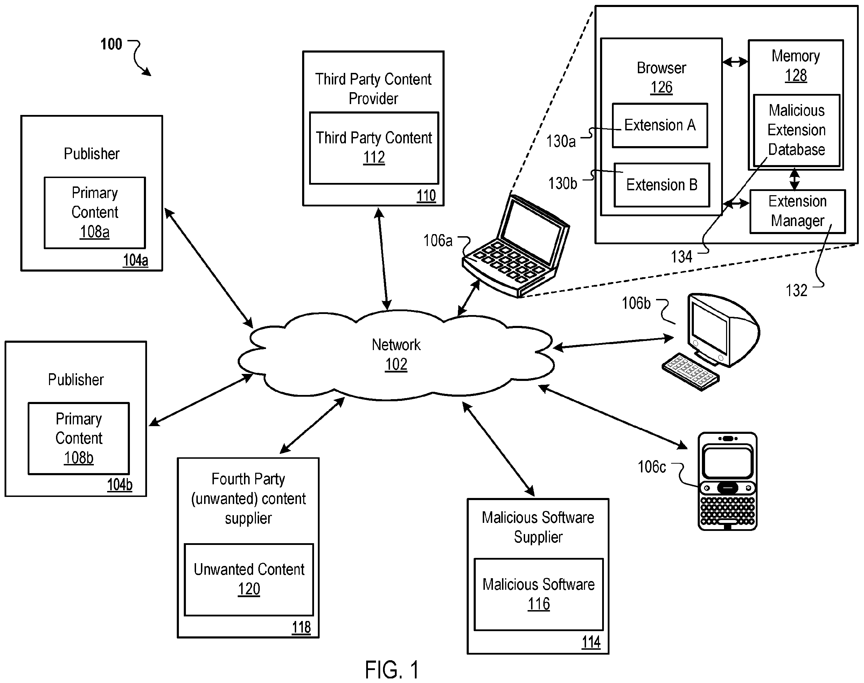

FIG. 1 shows a block diagram of an example environment 100 in which content is distributed to user devices 106. The example environment 100 includes a network 102, such as a local area network (LAN), a wide area network (WAN), the Internet, or a combination thereof. The network 102 connects websites 104, user devices 106, and content item providers 104. The example environment 100 may include many user devices 106 and many publishers 104 (i.e., content item providers) providing a variety of primary content 108.

The resource publishers 104 can provide resources for presentation on the user devices 106. For example, the publisher 104a can include a database of resources that can be provided through the network 102 to the user devices 106. In some implementations, the resources published by the resource publishers 104 can take the form of webpages containing text, pictures, graphics, embedded video, embedded audio, and other media. The resources published by the resource publishers 104 can also take the form of streaming audio, streaming video, text message updates sent to mobile devices, or other digital media. In some implementations, each of the resource publishers 104 can be an entity that controls, manages and/or owns a collection of one or more websites. A website is one or more resources associated with a domain name and hosted by one or more servers. An example website is a collection of web pages formatted in hypertext markup language (HTML) that can contain text, images, multimedia content, and programming elements, such as scripts. Each website can be maintained by a publisher, which is an entity that controls, manages and/or owns the website.

The example environment 100 can include a third party content provider 110 that controls the distribution of third party content items 112 to user devices 106. For example, the third party content provider 110 can be a collection of video servers that provide video content for presentation at the user devices 106. The third party content provider 110 can provide third party content items 112 (e.g., advertisements, images, videos, audio, or other content) to user devices for display alongside a resource (primary content 108) published by the publishers 104. The third party content items 112 provided by the third party content provider 110 (which differs from the publisher) can be incorporated with the resources provided by the publishers 104 for display by the user devices 106 either at the user devices 106 or elsewhere. For example, the publisher 104a can provide a webpage containing an article about the rocky mountains configured to, when loaded by the client device 106a, request and receive images of the rocky mountains from the third party content provider 110 and incorporate the images into a display that includes the provided webpage.

A client device 106 is an electronic device that is capable of requesting and receiving resources over the network 102. Example user devices 106 include personal computers (e.g., the user devices 106a and 106b), mobile communication devices (e.g., the client device 106c), and other devices that can send and receive data over the network 102. A client device 106 typically includes a user application, such as a web browser, to facilitate the sending and receiving of data over the network 102. For example, the client device 106a includes a browser 126 installed on the client device 106a for facilitating sending and receiving of data over the network 102 and for presenting primary content 108 and third party content 112 received from the resource publishers 108 and third party content provider 110 respectively to users of the client device 106a.

A client device 106 can submit a resource request that requests a resource from a publisher. For example, the client device 106b can send a request through the network 102 to the publisher 108b for primary content 108b (e.g., an article about the latest celebrity news). In turn, data representing the requested primary content 108b can be provided to the client device 106b for presentation by the client device 106b. The requested primary content 108b can be, for example, a home page of a website, a web page from a social network, a video clip, or a word processing document. The data representing the requested primary content item 108b can include data that causes presentation of the primary content 108b at the client device 106b.

The primary content 108 can also include one or more tags or indicators that, when executed, cause the client device 106b to generate requests for third party content (e.g., video content, audio content, images, animated graphics, text content, advertisements, or other content provided by a third-party) and transmit the requests to one or more content item distribution networks, such as the third party content provider 110. For example, a webpage provided by the publisher 104a to the client device 106b includes tags that cause requests for two images and a video for display along with the webpage to be generated. The client device 106b can send a request for the two images and video matching the parameters specified by the webpage to the third party content provider 110. In response to the request, the third party content provider 110 can provide the requested images and video to the client device 106b through the network 102 for display on the client device 106b along with content of the webpage (e.g. in margins of the webpage next to the primary content of the webpage, or along the top or bottom of the webpage).

In some implementations, tags included in the resource provided to the user devices 106 can include data specifying content item slots. A content item slot is a portion of the resource (e.g., a portion of a web page) or a portion of a user display (e.g., a presentation location of another window or in a slot of a web page) in which content items, such as video, audio, or image content, etc., can be presented. For example, a content item slot can specify a spatial position for a content item that is a specified distance (e.g., 2 cm or a specified number of pixels) below, above, or next to a portion of the resource that is visible upon initial presentation of the resource at the user device. In some implementations, when the user devices 106 render a resource, execution of code associated with a slot in the resource initiates a request for a content item to populate the slot. The content item request is then sent to a content item distribution system (e.g., the third party content provider 110) which provides a content item for the content item slot.

As discussed above, resources such as webpages (and third party content items) are rendered by a browser operating on a computing device. For example, the browser 126 running on the client device 106a can render primary content 108 received from the publishers 104 along with third party content 112 received from the third party content provider 110 in response to a request for third party content that is sent to the third party content provider 110 from the client device 106a when code included in the primary content is executed by the browser 126. For example, the browser 126 renders a webpage received at the client device 106a to display primary content of the webpage. The webpage also includes code which causes the browser 126 to request one or more third party content items 112 (such as videos or images) for display in content item slots along with the primary content of the webpage.

The browser 126 can also include one or more extensions 130 that are installed as add-ons to the browser 126. The extensions 130 can be provided, for example, by a software provider that provided the software for the browser 126 or by a third party software provider that has designed the extensions 130 to operate with the browser 126. The extensions 130 can alter the execution of the browser 126. For example, a browser 130a can set a specialized background image for a home screen of the browser 126 while a browser 130b adds a side bar to the browser 126 that displays current sports scores for sports teams the user of the client device 106a has indicated an interest in. In some instances, the user of the client device 106a can search for browser extensions online and install the browser extensions on the client device 106a such that the browser extensions alter some functionality of the browser 126.

Unfortunately, in practice, not all browser extensions add useful or beneficial functionality to the operation of the browser 126. Or in some cases, a browser extension may provide some desirable functions while also performing unwanted or undesirable functions. For example, a malicious software supplier 114 can also be connected to the network 102 and can supply malicious software 116 to the user devices 106. This malicious software 116, if installed on one of the user devices 106, such as the client device 106a, can alter the performance of the browser 126 and/or the client device 106a in undesirable or unbeneficial ways that were not intended by the user. In some instances, the malicious software supplier 114 can indicate that a particular piece of software has certain functionality, but in reality, the software may perform other unwanted functions once installed or a mixture of desirable and undesirable functions. The malicious software 116 can take the form of a browser extension or software that operates separate from the browser 126 on the client device 106a.

Malicious software 116 (including malicious browser extensions) can take several forms. For example, a content blocker type malicious software 116 can block or otherwise restrict access to desired content that a user wishes to view. For example, a content blocker type malicious browser extension can prevent a browser from loading third party content 112 (e.g., videos, audio content, images, etc.) requested by the browser 126 from the third party content provider 110 in response to execution of code included in a webpage rendered by the browser 126. Some content blocker type malicious software 116 can prevent the user from accessing certain websites or certain portions of websites altogether. Additionally, such content blocker type malicious software 116 can prevent the user from viewing information that compliments primary content of a webpage displayed in the browser 126 or other information that the user may wish to view, such as previews of articles related to an article included in a webpage. In some cases, the content blocker type malicious software 116 can replace the content requested in response to execution of code in the webpage with other content that was not indicated by code included in the webpage.

As another example, content injector type malicious software 116 can inject unwanted content provided by a fourth party content provider that has not been requested in response to execution of code in a webpage requested by the user. For example, a user of the client device 106a enters a URL for a webpage into the browser 126. The browser 126 causes the client device 106a to request a webpage containing primary content from the publisher 104b. The publisher 104b provides a webpage containing primary content from the store of primary content 108b to the client device 106a. The browser 126 renders the webpage to display the primary content and additionally executes code included in the webpage to generate a request for one or more third party content items 112 from the third party content provider 110. The browser 126 displays the third party content 112 received from the third party content provider 110 along with the primary content of the webpage. Additionally, in this example, the browser extension 130a is a content injector type malicious browser extension. For example, the browser extension 130a was previously received at the client device 106a from the malicious software supplier 114 and installed in the browser 126.

The browser extension 130a (which is a content injector type malicious browser extension in this example) can alter the operation of the browser 126 to cause the browser 126 to display additional fourth party content that was not requested in response to execution of code included in the webpage received from the publisher 104a. For example, the malicious browser extension 130a can detect that the browser 126 has received the webpage and is rendering primary content of the webpage for display on a display screen of the client device 106a. The malicious browser extension 130a can then generate a request for fourth party content (e.g., unwanted content) and cause the client device 106a to transmit the request to a fourth party content supplier 118. The malicious browser extension 130a generates the request independent of any code included in the webpage rendered by the browser 126. In response to receiving the request, the fourth party content supplier 118 can provide one or more fourth party content items from a store of unwanted content items 120. The fourth party content supplier 118 then supplies the unwanted fourth party content to the client device 106a. The malicious browser extension 130a then causes the browser 126 to display the unwanted fourth party content received from the fourth party content supplier 118 along with some or all of the content of the webpage rendered by the browser 126.

In some instances, the browser extension 130a can cause the browser 126 to display the unwanted fourth party content 120 in content item slots specified by the webpage in place of third party content items 112 requested from the third party content provider 110 as indicated by code in the webpage. In some instances, the browser extension 130a can cause the browser 126 to display the unwanted fourth party content 120 in other locations which may partially or completely block primary content of the webpage or one or more third party content items 112 received from the third party content provider 110. One distinction between unwanted fourth party content 120 received from the fourth party content supplier 118 and third party content 112 received from the third party content provider 110 is that the browser 126 generates requests for the third party content 112 in response to executing code contained in a webpage that is received from a publisher 104; whereas, by contrast, the malicious browser extension 130a generates requests for the unwanted fourth party content 120 and causes the client device 106a to transmit the requests to the fourth party content supplier 118 independent of code included in the webpage. In some instances, the browser extension 130a may scan the webpage to identify information included in the webpage such that tangentially related unwanted fourth party content 120 is requested, but the fourth party content 120 is not requested in response to a direct indication of a request for additional content included in the webpage.

In some cases, the unwanted fourth party content items 120 may, for example, attempt to entice the user to select the fourth party content items 120 to direct the browser 126 to a network location (e.g., a URL) that the user has not requested or that may install additional malicious software on the client device 106a. As another example, the unwanted fourth party content 120 may display information that is irrelevant or unrelated to primary content of the webpage requested by the user. Additionally, the actions performed by the malicious browser extension 130a in requesting the unwanted fourth party content 120 and causing the browser 126 to render the unwanted fourth party content 120 can commandeer computing resources such as active memory or processing capacity of the client device 106a thereby slowing performance of the client device 106a in general. As such, removal of the malicious browser extension will result in improving the performance of the client device.

As yet another example of malicious software 116, phishing type malicious software 116 may attempt to elicit a user to enter sensitive or personal information (e.g., credit card information) that can be used, for example, to steal the user's identity or steal from the user by making unauthorized charges to the user's credit card.

Another example of malicious software 116 is a browser extension that may attempt to access information stored on a client device 106 and transmit the information to a remote server that is associated with the malicious software. For example, a malicious browser extension 130 can access a user's browser history and provide this information to a remote server without knowledge or permission of the user. Other types of malicious browser extensions include browser extensions that occupy a portion of the display area of the browser 126, thereby cluttering the display with unwanted visual information. Examples include search bars that mimic a URL or search bar of the browser 126 but direct the user to a search service or other server that may not be the search service the user intended to contact. A malicious browser extension 130 may also access resources of a client device 106 to cause the client device 106 to act as a "bot" to perform actions at the request of a remote "master" computing system. A malicious browser extension 130 may also over utilize computer resources (e.g., by constantly running in the background to scan the content of loaded webpages to identify opportunities to inject unwanted fourth party content, or by engaging in unwanted or unauthorized communication with a remote server) which can slow overall performance of the client device 106.

Continuing with the example shown in FIG. 1, the example environment 100 includes an extension manager 132 installed on the client device 106a. The extension manager 132 can monitor the operation of browser extensions 130 installed on the client device 106a and identify malicious browser extensions or potentially malicious activity of one or more browser extensions. The extension manager 132 can then disable identified malicious or potentially malicious browser extensions. The extension manager 132 can further be configured to automatically uninstall itself from the client device 106a upon completion of disabling of malicious browser extensions. In some implementations, the extension manager 132 is not limited to identifying malicious or potentially malicious browser extensions, but rather is configured to identify and disable malicious or potentially malicious software installed on the user devices 106 in general.

To install the extension manager 132, the user of the client device 106a can, for example, access a remote server to download and install the extension manager 132. As another example, the user can install the extension manager 132 from a physical storage device such as a CD-ROM or a flash "thumb" drive. The extension manager 132 can be installed as an extension to the browser 126. For example, the browser extension 130b can be an extension manager. In some implementations, the extension manager 132 can be standalone software that is installed on the client device 106a but is not installed as a browser extension.

The extension manager 132 can use one or more techniques to identify malicious or potentially malicious browser extensions. For example, the extension manager 132 can identify browser extensions that are installed on the client device 106a by identifying software that modifies some aspect of the functionality of the browser 126, including by identifying browser extensions that modify display functionality or communication functionality of the browser 126. The extension manager 132 can also scan a program registry of the client device 106a to identify browser extensions installed on the client device 106a. The extension manager 132 can then analyze attributes and/or functionality of identified browser extensions to determine if any of the identified browser extensions are malicious or potentially malicious browser extensions.

In one example process, the extension manager 132 can compare identifying information (such as an extension ID) for identified browser extensions to a database of previously identified malicious browser extensions 134 stored in a computer memory 128. The extension manager 132 can perform this comparison to determine if any of the identified browser extensions are included in the database of malicious browser extensions. In the example environment 100 shown in FIG. 1, the malicious extension database 134 is stored in memory 128 (e.g., active memory, solid state memory, or hard disk memory space) of the client device 106a. In other examples, the malicious extension database 134 is stored at a remote location. For example, a malicious extension identification server can communicate with the client device 106a through the network 102. The extension manager 132 can provide identifying information for browser extensions 130 installed on the client device 106a to the malicious extension identification server which can access the malicious extension database 134 to determine if any of the browser extensions 130 are malicious browser extensions and return indications of identified malicious browser extensions to the client device 106a for use by the extension manager 132 in disabling malicious browser extensions.

Identifying information for extensions 130 that can be used to determine if any of the extensions 130 are malicious browser extensions can take several forms. For example, a title or name for an extension 130 can be used to uniquely identify the extension 130. If the title or name for the extension 130 appears in the malicious extension database 134, the extension 130 is identified as a malicious or potentially malicious extension. As another example, a file name for a file associated with an extension 130 (e.g., the file name of an install file, executable file, data file, or other file associated with the extension 130) can be compared to file names in the malicious extension database 134 to determine if the extension 130 is a malicious extension. As another example, identifying information for an extension 130 can take the form of a unique string of characters that acts as an identifier for the extension 130.

In some implementations, identifying characteristics of remote computing systems that communicate with an extension 130 can be used as identifying information for the extension 130. For example, the extension manager 132 can determine that a particular extension 130 communicates with certain external computing systems. These external computing systems can be identified, for example, by IP addresses, URL identifiers, or other identifiers. The extension manager 132 can then compare these identifiers for the external computing systems in communication with the extension 130 to values stored in the malicious extension database 134 to determine if any of the identifiers for these external computing systems indicate that the browser 130 is a malicious browser 130. For example, the extension manager 132 can determine that the browser extension 130b communicates with the fourth party content supplier 118. The extension manager 132 can identify the fourth party content supplier 118 using an IP address or URL associated with the fourth party content supplier 118. The extension manager 132 can then access the malicious extension database 134 and compare the identifier for the fourth party content supplier 118 (e.g., the IP address or URL used by the browser extension 130b to communicate with the fourth party content supplier 118) to information included in the malicious extension database 134. If the identifier for the fourth party content supplier 118 is included in the malicious extension database 134, the extension manager 132 can determine that the browser extension 130b is considered a malicious browser extension.

Other attributes or functionality of a browser extension 130 can also be used to determine if the browser extension 130 is a malicious browser extension. For example, extensions 130 that access particular communication ports of the client device 106a can be identified (using information in the malicious extension database 134) as malicious or potentially malicious browser extensions. As another example, extensions 130 that are determined to access particular portions of memory (e.g., hard disk space) of the client device 106a can be identified (using information in the malicious extension database 134) as malicious or potentially malicious browser extensions. For example, browser extensions 130 that are determined to access restricted portions of computer memory can be identified as malicious or potentially malicious browser extensions. These types of malicious browser extensions can be identified by the extension manager 132, and disabled. For example, the extension manager 132 can monitor communication ports used, or memory locations accessed by a browser extension, and if the extension manager detects that the browser extension has improperly accessed a communication port or portion of memory, the extension manager can classify the browser extension as a malicious browser extension, and disable the malicious browser extension.

In some implementations, in addition to, or in place of utilizing the malicious extension database 134 to identify malicious or potentially malicious browser extensions, the extension manager 132 can monitor actions of extensions 130 to determine if the extensions 130 are performing functions indicative of a malicious or potentially malicious browser extension. For example, the extension manager 132 can monitor the activity of browser extension 130a to determine if the browser extension 130a prevents some or all third party content 112 provided by the third party content provider 110 for presentation by the browser 126 along with primary content of a webpage from being displayed by the browser 126 (i.e., a content blocker type malicious browser extension). Such activity by the browser extension 130a can be used by the extension manager 132 to identify the browser extension 130a as a malicious or potentially malicious browser extension. As another example, the extension manager 132 can determine if the browser extension 130a is preventing the browser 126 from displaying all or part of primary content received from a publisher 104.

As another example, the extension manager 132 can monitor actions of the browser extension 130a to determine if the browser extension 130a is communicating with one or more untrusted or malicious external computing systems. The extension manager 132 can identify external computing systems in communication with the browser extension 130a by, for example, identifying URLs or IP addresses of the external computing systems. The extension manager 132 can then compare this identifying information for the external computing systems to a previously stored list of identified malicious or untrusted computing systems to determine if the browser extension 130a is communicating with a malicious or untrusted computing system. Such activity can be used to identify the browser extension 130a as a malicious or potentially malicious browser extension. Malicious or untrusted computing systems can include computing systems identified as fourth party content suppliers such as the fourth party content supplier 118, computing systems associated with content blocking browser extensions, computing systems identified as phishing computing systems, or computing systems identified as being associated with other unwanted or undesirable activity.

In some implementations, frequency of communications with external computing systems is used by the extension manager 132 to determine that the browser extension 130a is a malicious or potentially malicious browser extension. This frequency can be a total frequency of external communications initiated by the browser extension 130a, or frequency of external communications with one or more particular external computing systems (e.g., as identified by IP address or URL) such as previously identified malicious or untrusted external computing systems. The extension manager 132 can compare an identified frequency of communication by the browser extension 130a to a threshold value to determine if the browser extension 130a is a malicious or potentially malicious browser extension.

As another example, the extension manager 132 can monitor actions of the browser extension 130a to determine if the browser extension 130a is causing the browser 126 to display fourth party content that was not requested by the browser 126 in response to executing code included in a webpage rendered by the browser 126. For example, the extension manager 132 can determine that the browser extension 130a has requested unwanted fourth party content 120 from the fourth party content supplier 118 and that the request for the unwanted fourth party content 120 was initiated by the browser extension 130a without being indicated by code included in a webpage being loaded by the browser 126. Such activity can be used by the extension manager 132 to determine that the browser extension 130a is a malicious or potentially malicious browser extension. In some implementations, the extension manager 132 will only identify the browser extension 130a as a malicious or potentially malicious browser extension if the fourth party content 120 is displayed over a portion of the webpage (e.g., over a portion of the primary content of the webpage, or over a portion of one or more third party content items 112 requested in response to execution of code included in the webpage for display in a content item slot).

As another example, the extension manager 132 can identify extensions 130 that cause the browser 126 to display information that obscures part or all of primary content of a webpage or third party content 112 (even if the information displayed by the extensions 130 is not received from a fourth party content supplier 118) as being malicious or potentially malicious browser extensions. As another example, the extension manager 132 can monitor the activities of the browser extension 130a to determine if the browser extension 130a is eliciting the user of the client device 106a to enter particular information. Such activity can be used to flag the browser extension 130a as a malicious or potentially malicious browser extension. As yet another example, the extension manager 132 can monitor the browser extension 130a to determine if the browser extension 130a attempts to direct the user of the client device 106a to a potentially malicious or untrusted external server (e.g., by inserting links or images in a webpage, or by including links or selectable images in a toolbar displayed in the periphery of the browser 126 display). The extension manager 132 can identify external computing systems to which the browser extension 130a is attempting to direct the user by, for example, identifying URLs or IP addresses of the external computing systems. The extension manager 132 can then compare this identifying information for the external computing systems to a previously stored list of identified malicious or untrusted computing systems to determine if the browser extension 130a is attempting to redirect the user to a malicious or untrusted computing system. Such activity can be used to identify the browser extension 130a as a malicious or potentially malicious browser extension.

In some implementations, the extension manager 132 can automatically disable all extensions 130 identified as malicious browser extensions. The extension manager 132 can disable a malicious browser extension 130 by, for example, deactivating the extension 130. Deactivating a malicious extension 130 leaves the malicious extension 130 installed on the client device 106a, but the malicious extension 130 is in a dormant state and does not execute on the client device 106a. As another example, the extension manager 132 can disable a malicious extension 130 by uninstalling the malicious extension 130 from the client device 106a (which could include initiating a process that causes the browser 126 or other software installed on the user devices 106a to uninstall the malicious extension 130). As yet another example, the extension manager 132 can disable a malicious extension 130 by preventing the malicious extension 130 from altering functionality of the browser 126 or by preventing the malicious extension 130 from performing certain functions, including preventing the malicious extension 130 from communicating with particular external computing devices.

In some implementations, the extension manager 132 does not immediately disable malicious or potentially malicious browser extensions upon identifying them as malicious or potentially malicious browser extensions. In such implementations, the extension manager 132 can provide a dialog to the user of the client device 106a to identify which malicious or potentially malicious browser extensions to disable. In some implementations, the extension manager 132 can compare extensions 130 identified as malicious or potentially malicious browser extensions to a "white list" of browser extensions that indicates browser extensions that the user (or another person) has identified as acceptable browser extensions. For example, the user may indicate that a particular content injector browser extension that adds a smiley face to all webpages loaded by the browser 126 should not be disabled by the extension manager 132 by including the particular content injector browser extension on a white list of okayed browser extensions.

In some implementations, the extension manager 132 uninstalls itself from the client device 106a upon completion of identifying and disabling malicious or potentially malicious browser extensions, the extension manager 132 uninstalls itself from the client device 106a. Such functionality could include initiating a process that causes the browser 126 or other software installed on the user devices 106a to uninstall the extension manager 132. Such automatic uninstallation can maximize resources of the client device 106a as the extension manager 132 will no longer occupy memory space or utilize processing power after uninstallation.

Although the extension manager 132 is shown in the example environment 100 as being located at the client device 106a, in some implementations, it is possible for the extension manager 132 to be located on a remote computing device and communicate with the client device 106a to identify and disable malicious browser extensions. For example, content provider, such as one of the publishers 104 can include an extension manager that communicates with the client device 106a (at the user's request) to identify and disable malicious browser extensions. As another example, a remote computing system that is associated with the browser 126 can provide remote extension management functionality for the client device 106a. In some implementations, some of the functionality of the extension manager 132 can be performed by a remote computing system while other functionality of the extension manager 132 is performed at the client device 106a. For example, a remote computing system, upon receiving a user request to identify malicious and potentially malicious browser extensions, can communicate with the browser 126 to identify malicious and potentially malicious browser extensions installed on the browser 126. Upon identifying the malicious and potentially malicious browser extensions, the remote computing system can give the user the option to download and install an extension manager that can disable the identified malicious and potentially malicious browser extensions and then uninstall itself from the client device 106a.

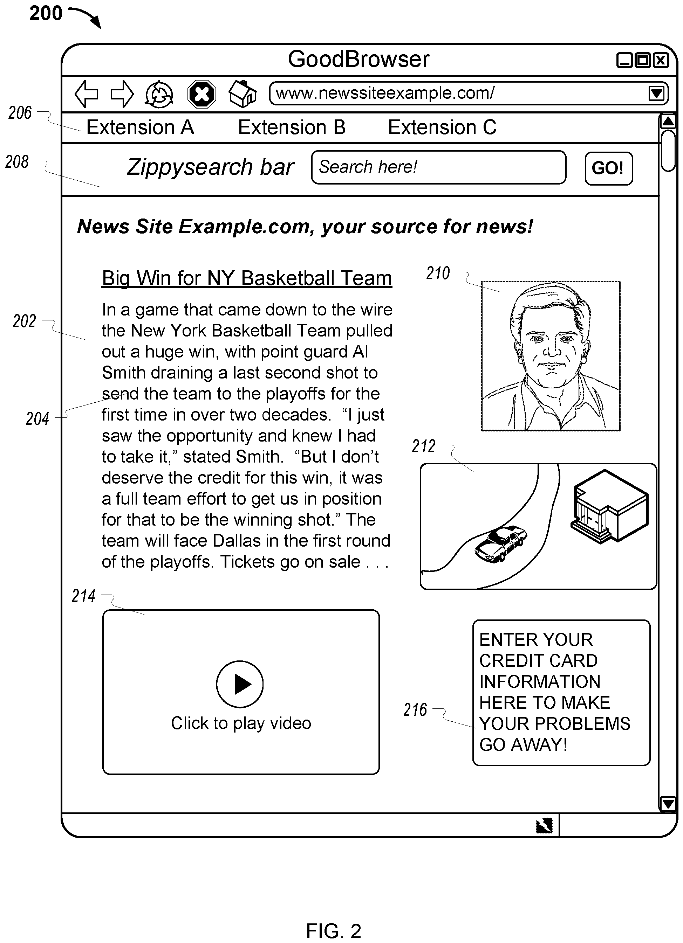

Turning to FIG. 2, an example browser 200 can render a webpage 202 that includes primary content 204. The browser 200 can be, for example, the browser 126 of FIG. 1 executing on the client device 106a. The webpage 202 can be received from the publisher 104a of FIG. 1 in response to user interaction with the browser 200, such as the user typing a URL into a URL bar of the browser 200. The browser 200 can include a number of browser extensions 206 that are installed on the browser 200 to alter functionality of the browser 200. For example, Extension A can change the look or "theme" of the browser 200 to display logos for a particular sports team. As another example, Extension B can cause an audio player for a preferred internet radio station of the user of the browser 200 to be displayed somewhere within the display of the browser 200 such that the user can control playback and other settings for the internet radio station without having to visit a webpage for the internet radio station.

In some implementations, the browser 200 includes visual representations of browser extensions 206 installed on the browser 200 such as those shown in the example in FIG. 2. In some implementations, only some browser extensions 206 have visual representations in the display of the browser 200 while other browser extensions 206 have no visual representation. In some implementations, none of the browser extensions 206 have visual representations in the main display of the browser 200. In some implementations, the user of the browser 200 can access a separate browser extension control screen (e.g., by accessing a "settings" control of the browser 200) that lists browser extensions 206 that are installed on the browser 200.

In the example shown in FIG. 2, the browser 200 includes a browser extension 206 that causes a search bar 208 to be included in the display of the browser 200. The search bar 208 can, for example, adapt certain display features to blend in with other display aspects of the browser 200, but may direct the user to a less desirable search site when search strings are entered into the search bar 208 by the user.

In some instances, the browser extensions 206 are intentionally installed on the browser 200 by a user of the browser 200. For example, the user may want to install a browser extension that adds a stock ticker feed to a portion of the browser 200 display window. The user can search for the browser extension online and install the browser extension in the browser 200. In some instances, browser extensions 206 are installed inadvertently. For example, some browser extensions 206 may automatically install when a user selects a particular hyperlink in a webpage even if the user did not intend to install the particular browser extension 206. As another example, a user may install software on a user device that includes the browser 200. The software may automatically install a browser extension 206 in addition to other programs on the user device. In some instances, a user may install a browser extension 206 and then later find that the installed browser extension 206 does not have the advertised functionality, or has different functionality that the user finds undesirable.

As discussed above, the browser 200 displays the webpage 202 that includes primary content 204. The webpage 202 displayed by the browser 200 can also include third party content items. For example third party content items such as images 210 and 212 and video content 214 can be displayed as part of the webpage 202. In some implementations, the third party content items are provided by third party content providers (such as the third party content provider 110 of FIG. 1) in response to requests generated by the browser 200 that are generated when the browser 200 executes code included in the webpage 202. For example, the webpage 202 can be received over a network from a publisher and include the primary content 204 as well as code that, when executed by the browser 200, causes the browser 200 to generate requests for the images 210 and 212 and the video content 214. Other examples of third party content can include text, such as previews of primary content for other webpages, audio content, or combinations of text, graphic, audio, or video content.

In some implementations, one or more of the browser extensions 206 is a malicious browser extension. For example, the Extension A may be a content blocker type browser extension that, when installed on the browser 200, prevents the browser 200 from displaying the image 212 along with other content of the webpage 202 even though the webpage 202 includes code that initiates a request for the image 212 for display with the webpage 202. As another example, the Extension B may be a content injector type browser extension that ads unwanted fourth party content to the display of the webpage 202. For example, the Extension B can detect that the browser 200 is loading the webpage 202 and, in response, contact a fourth party content server to request a fourth party content item 216 from the fourth party content item. The Extension B can then cause the browser 200 to display the fourth party content item 216 as part of the display of the webpage 202 even though the code included in the webpage 202 did not instruct the browser 200 to display the fourth party content item 216. In some cases, the fourth party content item 216 can, attempt to mimic other portions of the webpage 202 to entice the user to select the fourth party content item 216 to be directed to an untrusted server system or to elicit the user to enter information that is provided to an untrusted server system. Others of the browser extensions 206 may also be other types of malicious browser extensions as described above with respect to FIG. 1.

In some instances, it may be difficult for a user of the browser 200 to uninstall one or more browser extensions 206. For example, in some implementations, a browser 200 can include a browser extension control screen that includes an option to disable or uninstall browser extensions 206 included in a list of browser extensions 206 installed on the browser 200. However, some of the disable or uninstall controls may be disabled themselves or "grayed out" such that the user is not able to use the browser extension control screen to disable or uninstall certain browser extensions 206. This can especially be the case for malicious browser extensions 206 installed on the browser 200.

The browser 200 can include an extension manager that is installed on the browser as a browser extension. Alternatively, the extension manager can be installed on a computing device that includes the browser 200 but not be installed as a browser extension. The extension manager can identify malicious or potentially malicious browser extensions using techniques described above with respect to FIG. 1 and then disable identified malicious or potentially malicious browser extensions. For example, the extension manager can compare identifying information for browser extensions 206 to browser extension identifying information included in a database of malicious browser extensions to determine if any of the browser extensions 206 is a malicious or potentially malicious browser extension. As another example, the extension manager can monitor actions of the browser extensions 206 to determine if any of the browser extensions 206 is performing actions that are indicative of a malicious browser extension.

In some implementations, the extension manager automatically disables (e.g., deactivates, uninstalls, or restricts functionality/access of) identified malicious browser extensions. In some implementations, the extension manager can then proceed to automatically uninstall itself after completion of disabling the identified malicious browser extensions.

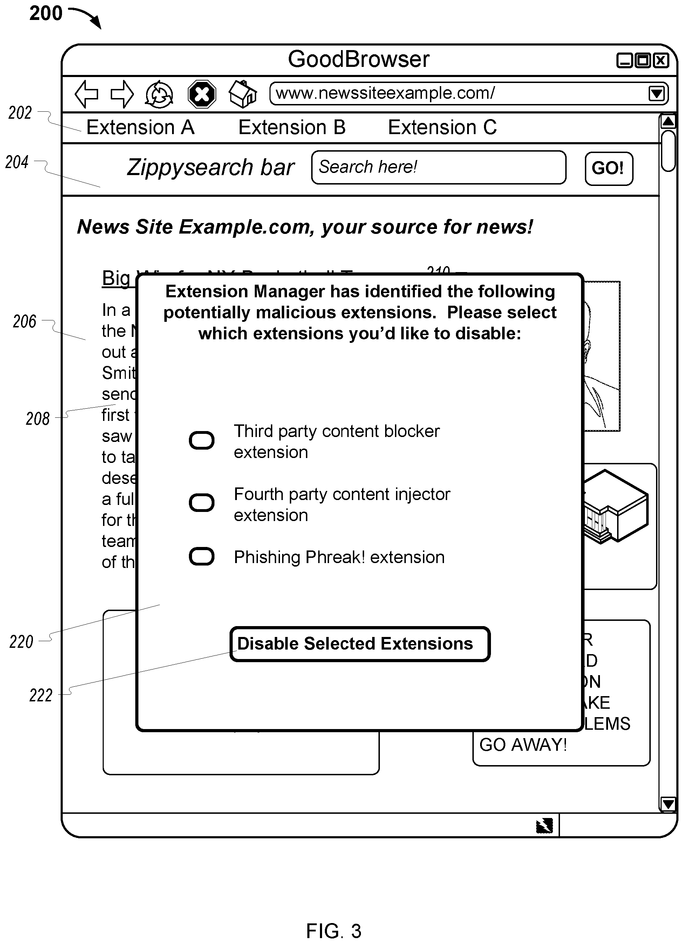

Turning to FIG. 3, in some implementations, after the extension manager has identified malicious or potentially malicious browser extensions from among the browser extensions 206 installed on the browser 200, the extension manager can present an extension manager dialog 220 to the user of the browser 200. The extension manager dialog 220 includes a list of browser extensions 206 identified by the extension manager as malicious or potentially malicious browser extensions. The extension manager dialog 220 can include controls, such as, for example, check boxes, that allow the user to identify identified browser extensions 206 to disable. The extension manager dialog 220 further includes a control 222 that, when selected by the user (e.g., interacted with by way of a mouse click or finger tap on a touch screen), causes the extension manager to disable the identified browser extensions 206. In some implementations, the extension manager dialog 220 can allow the user to specify how the identified browser extensions 206 are to be disabled. For example, the extension manager dialog 220 can allow the user to specify if identified browser extensions 206 are to be deactivated, uninstalled, have certain functionality or access restricted, or be disabled in another manner. For example, user interface elements that enable the user to select how the browser extensions 206 are to be deactivated can be presented in the user interface.

In some implementations, after the extension manager has disabled the identified browser extensions 206 in response to the user selecting the control 222, the extension manager initiates an uninstall routine to uninstall itself from the browser 200 and/or the user device on which the browser 200 resides.

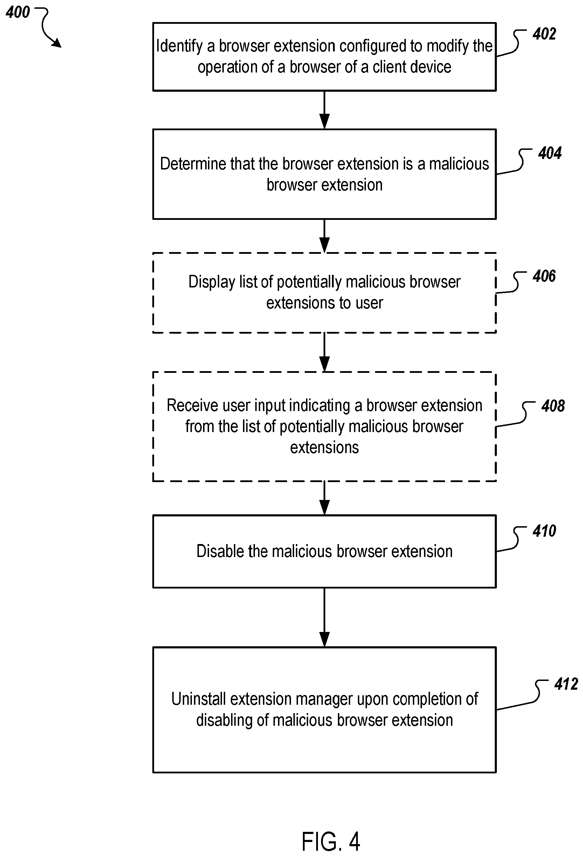

FIG. 4 is a flow chart of an example process 400 for identifying and deactivating malicious browser extensions. The process 400 can be performed by one or more data processing apparatus, such as the user devices 106 of FIG. 1. Specifically, the extension manager 132 executing on the client device 106a can perform the process 400. Operations of the process 400 can be implemented by instructions stored on a non-transitory computer readable medium, where execution of the instructions causes one or more data processing apparatus to perform operations of the process 400.

A browser extension configured to modify the operation of a browser of a client device is identified (402). For example, a software module installed on the client device, such as an extension manager, can identify a browser extension that is installed on the client device such that the browser extension modifies operation of a browser installed on the client device. The extension manager can identify the browser extension by, for example, accessing a registry of programs installed on the client device to identify browser extensions. As another example, the extension manager can interact with the browser to identify browser extensions installed on the client device. For example, the browser can keep a registry or list of browser extensions installed on the client device that are configured to modify operation of the browser. The browser can communicate this information to the extension manager to allow the extension manager to identify one or more browser extensions installed on the client device.

The browser extension is determined to be a malicious browser extension (404). For example, an extension manager can use one or more techniques to identify that the browser extension is a malicious browser extension, including comparing identifying information for the browser extension to information contained in a database of identified malicious browser extensions and monitoring activity of the browser extension to identify actions that are indicative of a malicious browser extension, such as blocking display of content in the browser, injecting additional, unwanted fourth party content into the display on the browser, communicating with previously identified untrusted remote computing systems, or attempting to access restricted memory locations.

A list of potentially malicious browser extensions is optionally displayed to the user of the client device (406). For example, as discussed above with respect to FIG. 3, an extension manager dialog (such as the extension manager dialog 220 of FIG. 3) can be displayed to the user that includes a list of identified malicious and potentially malicious browser extensions installed on the client device. The extension manager dialog can include controls that allow the user to indicate browser extensions that should be disabled. For example, the extension manager dialog can allow a user to tap or click a control to select a browser extension to be disabled.

User input indicating a browser extension from the list of potentially malicious browser extensions is optionally received from the user (408). For example, the user can use the controls in the displayed extension manager dialog (such as the controls 222 shown in FIG. 3) to select browser extensions to disable. As another example, the user can type in identifying information, such as a browser extension name, for a malicious or potentially malicious browser extension that the user wishes to have disabled by the extension manager.

The malicious browser extension is disabled (410). In some implementations, the extension manager can disable the malicious browser extension by deactivating the malicious browser extension, uninstalling the malicious browser extension from the client device, or by restricting actions of the malicious browser extension. For example, the extension manager can restrict the malicious browser extensions ability to communicate with remote computing systems (either all remote computing systems, or a list of specified untrusted remote computing systems). This disabling of the malicious browser extension can be performed, for example, automatically in response to determining that the identified browser extension is a malicious browser extension. In some implementations, the extension manager disables the malicious browser extension in response to user input (e.g., received at step 408) indicating that the malicious browser extension should be disabled.

The extension manager uninstalls itself upon completion of disabling of the malicious browser extension (412). For example, the extension manager can determine that disabling of the malicious browser extension has successfully completed. The extension manager can then initiate a uninstall process for itself to cause the client device to uninstall the extension manager and thereby free up additional computing resources that would otherwise be used by the extension manager.

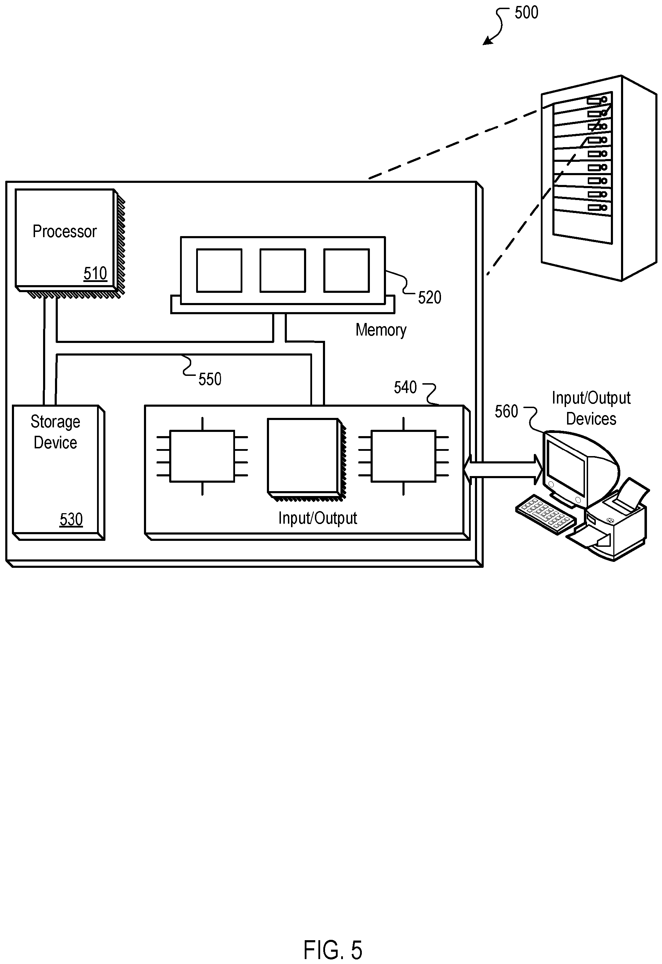

FIG. 5 is block diagram of an example computer system 500 that can be used to perform operations described above. The system 500 includes a processor 510, a memory 520, a storage device 530, and an input/output device 540. Each of the components 510, 520, 530, and 540 can be interconnected, for example, using a system bus 550. The processor 510 is capable of processing instructions for execution within the system 500. In one implementation, the processor 510 is a single-threaded processor. In another implementation, the processor 510 is a multi-threaded processor. The processor 510 is capable of processing instructions stored in the memory 520 or on the storage device 530.

The memory 520 stores information within the system 500. In one implementation, the memory 520 is a computer-readable medium. In one implementation, the memory 520 is a volatile memory unit. In another implementation, the memory 520 is a non-volatile memory unit.

The storage device 530 is capable of providing mass storage for the system 500. In one implementation, the storage device 530 is a computer-readable medium. In various different implementations, the storage device 530 can include, for example, a hard disk device, an optical disk device, a storage device that is shared over a network by multiple computing devices (e.g., a cloud storage device), or some other large capacity storage device.

The input/output device 540 provides input/output operations for the system 500. In one implementation, the input/output device 540 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other input/output devices, e.g., keyboard, printer and display devices 560. Other implementations, however, can also be used, such as mobile computing devices, mobile communication devices, set-top box television client devices, etc.

Although an example processing system has been described in FIG. 5, implementations of the subject matter and the functional operations described in this specification can be implemented in other types of digital electronic circuitry, or in computer software, firmware, or hardware, including the structures disclosed in this specification and their structural equivalents, or in combinations of one or more of them.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

A computer program (also known as a program, software, software application, script, or code) can be written in any form of programming language, including compiled or interpreted languages, declarative or procedural languages, and it can be deployed in any form, including as a standalone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, subprograms, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magnetooptical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magnetooptical disks; and CDROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a backend component, e.g., as a data server, or that includes a middleware component, e.g., an application server, or that includes a frontend component, e.g., a client computer having a graphical user interface or a Web browser through which a user can interact with an implementation of the subject matter described in this specification, or any combination of one or more such backend, middleware, or frontend components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous

## Claims

1. A computer implemented method, comprising:
Identifying (402), by an extension manager (132), that a browser extension that is installed on a computing device is configured to modify the operation of a browser application;
Determining (404), by the extension manager (132), that the browser extension is a malicious browser extension based on a manner that the browser extension modifies content presented within the browser application;
in response to determining that the browser extension is a malicious browser extension, disabling (410), by the extension manager (132) and within the browser application, the browser extension, wherein disabling the browser extension prevents the browser extension from modifying content presented within the browser application;
upon completion of disabling of the browser extension, initiating (412), by the extension manager (132), an uninstall process that uninstalls the extension manager from the computing device.

2. The method of claim 1, further comprising:
Providing (406), within a user interface presented at the computing device, a visual display of text or graphical information identifying the browser extension as a malicious browser extension; and
Receiving (408), in response to display of the text or graphical information identifying the browser extension as a malicious browser extensions, user input requesting that the browser extension be disabled;
wherein disabling, by the extension manager, the browser extension is performed in response to receiving, through the user interface presented at the computing device, the user input requesting that the browser extension be disabled.

3. The method of any preceding claim, wherein disabling the browser extension comprises uninstalling the browser extension.

4. The method of any preceding claim, wherein determining that the browser extension is a malicious browser extension comprises:
accessing, by the extension manager, a memory device storing a list of malicious browser extensions that have been previously identified as browser extensions that modify content presented within browser applications; and
determining that the browser extension is included in the list of malicious browser extensions stored in the memory device.

5. The method of any preceding claim, wherein determining that the browser extension is a malicious browser extension comprises determining that the browser extension inserts unauthorized content into a display of primary content (108) that is obtained from a given network location and displayed within the browser application, wherein the unauthorized content is obtained from a different network location than the given network location of the primary content.

6. The method of any preceding claim, wherein determining that the browser extension is a malicious browser extension comprises determining that the browser extension blocks display of authorized content obtained by the computing device for display by the browser application, wherein the authorized content is one of primary content included in a given webpage requested by the browser application or third-party content (110) that is requested by the browser application through execution of code of the given webpage.

7. The method of any preceding claim, wherein determining that the browser extension is a malicious browser extension comprises determining that the browser extension is a fourth-party search bar extension that displays a search bar as part of the display of the browser application.

8. The method of any preceding claim, wherein determining that the browser extension is a malicious browser extension comprises determining that the browser extension communicates with outside servers independent of a request from the user or through execution of code included in a given webpage that was requested by the user for such communications.

9. A computing device, comprising:
a memory storing data and instructions; and
one or more processors that execute instructions stored on the memory, wherein the instructions cause the one or more processors to execute an extension manager that is configured to carry out a method according to any preceding claim.

10. A computer storage medium encoded with a computer program, the program comprising instructions that when executed by data processing apparatus cause the data processing apparatus to perform operations comprising a method according to any one of claims 1 to 8.

## Patentansprüche

1. Computerimplementiertes Verfahren, umfassend:
Identifizieren (402) durch einen Extension Manager (132), dass eine auf einer Rechenvorrichtung installierte Browsererweiterung so gestaltet ist, dass sie den Betrieb der Browseranwendung modifiziert;
Bestimmen (404) durch den Extension Manager (132), dass es sich bei der Browsererweiterung um eine schadhafte Browsererweiterung handelt, auf der Basis, dass die Browsererweiterung Inhalte modifiziert, die in der Browseranwendung präsentiert werden;
als Reaktion auf das Bestimmen, dass es sich bei der Browsererweiterung um eine schadhafte Browsererweiterung handelt, Deaktivieren (410) der Browserweiterung durch den Extension Manager (132) und in der Browseranwendung, wobei es das Deaktivieren der Browserweiterung verhindert, dass die Browsererweiterung Inhalte modifiziert, die in der Browseranwendung präsentiert werden;
nach Abschluss der Deaktivierung der Browsererweiterung, Einleiten (412) eines Deinstallationsprozesses durch den Extension Manager (132), wobei der Prozess den Extension Manager von der Rechenvorrichtung deinstalliert.

2. Verfahren nach Anspruch 1, ferner umfassend:
Bereitstellen (406) in einer an der Rechenvorrichtung präsentierten Benutzeroberfläche einer visuellen Anzeige von Text- oder grafischen Informationen, welche die Browsererweiterung als eine schadhafte Browsererweiterung identifizieren; und
als Reaktion auf die Anzeige der Text- oder grafischen Informationen, welche die Browsererweiterung als eine schadhafte Browsererweiterung identifizieren, Empfangen (408) einer Benutzereingabe, die eine Deaktivierung der Browsererweiterung fordert;
wobei die Deaktivierung der Browsererweiterung durch den Extension Manager ausgeführt wird als Reaktion auf den Empfang der Benutzereingabe, die eine Deaktivierung der Browsererweiterung fordert.

3. Verfahren nach einem der vorstehenden Ansprüche, wobei die Deaktivierung der Browsererweiterung die Deinstallation der Browsererweiterung umfasst.

4. Verfahren nach einem der vorstehenden Ansprüche, wobei das Bestimmen, dass es sich bei der Browsererweiterung um eine schadhafte Browsererweiterung handelt, folgendes umfasst:
Zugriff durch den Extension Manager auf eine Speichervorrichtung, welche eine Liste schadhafter Browsererweiterungen speichert, die zuvor als Browsererweiterungen identifiziert worden sind, die in Browseranwendungen präsentierte Inhalte modifizieren; und
Bestimmen, dass die Browsererweiterung in der in der Speichervorrichtung gespeicherten Liste schadhafter Browsererweiterungen enthalten ist.

5. Verfahren nach einem der vorstehenden Ansprüche, wobei das Bestimmen, dass es sich bei der Browsererweiterung um eine schadhafte Browsererweiterung handelt, das Bestimmen umfasst, dass die Browsererweiterung unerlaubte Inhalte in eine Anzeige eines primären Inhalts (108) einfügt, der von einer bestimmten Netzwerkposition erhalten und in der Browseranwendung angezeigt wird, wobei die unerlaubten Inhalte von einer anderen Speicherposition als der bestimmten Netzwerkposition des primären Inhalts erhalten werden.

6. Verfahren nach einem der vorstehenden Ansprüche, wobei das Bestimmen, dass es sich bei der Browsererweiterung um eine schadhafte Browsererweiterung handelt, das Bestimmen umfasst, dass die Browsererweiterung die Anzeige eines unerlaubten Inhalts blockiert, der von der Rechenvorrichtung zur Anzeige durch die Browseranwendung erhalten wird, wobei es sich bei dem unerlaubten Inhalt um eines der folgenden handelt: primären Inhalt, der in einer bestimmten Webseite enthalten ist, durch die die Browseranwendung angefordert wird, oder um Fremdinhalt (110), der durch die Browseranwendung über die Ausführung von Code der bestimmten Webseite angefordert wird.

7. Verfahren nach einem der vorstehenden Ansprüche, wobei das Bestimmen, dass es sich bei der Browsererweiterung um eine schadhafte Browsererweiterung handelt, das Bestimmen umfasst, dass die Browsererweiterung eine Fourth-Party-Suchleistenerweiterung ist, die eine Suchleiste als Teil der Anzeige der Browseranwendung anzeigt.

8. Verfahren nach einem der vorstehenden Ansprüche, wobei das Bestimmen, dass es sich bei der Browsererweiterung um eine schadhafte Browsererweiterung handelt, das Bestimmen umfasst, dass die Browsererweiterung mit externen Servern unabhängig von einer Anforderung von dem Benutzer kommuniziert oder durch Ausführung von Code, der in einer bestimmten Webseite enthalten ist, die durch den Benutzer für diese Kommunikationen angefordert worden ist.

9. Rechenvorrichtung, umfassend:
einen Speicher, der Daten und Anweisungen speichert; und
einen oder mehrere Prozessoren, die in dem Speicher gespeicherte Anweisungen ausführen, wobei die Anweisungen bewirken, dass der eine oder die mehreren Prozessoren einen Extension Manager ausführen, der für die Ausführung eines Verfahrens nach einem der vorstehenden Ansprüche gestaltet ist.

10. Computerspeichermedium, das mit einem Computerprogramm codiert ist, wobei das Programm Anweisungen umfasst, die, wenn sie durch eine Datenverarbeitungsvorrichtung ausgeführt werden, bewirken, dass die Datenverarbeitungsvorrichtung Operationen ausführt, die ein Verfahren nach einem der Ansprüche 1 bis 8 umfassen.

## Revendications

1. Procédé mis en œuvre par ordinateur, comprenant les étapes consistant à :
identifier (402), par un gestionnaire d'extension (132), qu'une extension de navigateur qui est installée sur un dispositif informatique est conçue pour modifier le fonctionnement d'une application de navigateur ;
déterminer (404), par le gestionnaire d'extension (132), que l'extension de navigateur est une extension de navigateur malveillante basée sur une manière dont l'extension de navigateur modifie le contenu présenté dans l'application de navigateur ;
en réponse à la détermination du fait que l'extension de navigateur est une extension de navigateur malveillante, désactiver (410), par le gestionnaire d'extension (132) et dans l'application de navigateur, l'extension de navigateur, la désactivation de l'extension de navigateur empêchant l'extension de navigateur de modifier le contenu présenté dans l'application de navigateur ;
une fois la désactivation de l'extension de navigateur terminée, déclencher (412), par le gestionnaire d'extension (132), un processus de désinstallation qui désinstalle le gestionnaire d'extension du dispositif informatique.

2. Procédé selon la revendication 1, comprenant en outre les étapes consistant à :
fournir (406), dans une interface utilisateur présentée au dispositif informatique, un affichage visuel d'informations textuelles ou graphiques identifiant l'extension de navigateur comme une extension de navigateur malveillante ; et
recevoir (408), en réponse à l'affichage des informations textuelles ou graphiques identifiant l'extension de navigateur comme une extension de navigateur malveillante, une entrée utilisateur demandant que l'extension de navigateur soit désactivée ;
la désactivation, par le gestionnaire d'extension, de l'extension de navigateur étant effectuée en réponse à la réception, par l'interface utilisateur présentée au dispositif informatique, de l'entrée utilisateur demandant que l'extension de navigateur soit désactivée.

3. Procédé selon l'une quelconque des revendications précédentes, la désactivation de l'extension de navigateur comprenant l'étape consistant à désinstaller l'extension de navigateur.

4. Procédé selon l'une quelconque des revendications précédentes, la détermination du fait que l'extension de navigateur est une extension de navigateur malveillante comprenant les étapes consistant à :
accéder, par le gestionnaire d'extension, à un dispositif de mémoire stockant une liste d'extensions de navigateur malveillantes qui ont été précédemment identifiées comme des extensions de navigateur modifiant le contenu présenté dans les applications de navigateur ; et
déterminer que l'extension de navigateur est incluse dans la liste des extensions de navigateur malveillantes stockées dans le dispositif de mémoire.

5. Procédé selon l'une quelconque des revendications précédentes, la détermination du fait que l'extension de navigateur est une extension de navigateur malveillante comprenant l'étape consistant à déterminer que l'extension de navigateur insère un contenu non autorisé dans un affichage de contenu primaire (108) qui est obtenu à partir d'un emplacement de réseau donné et affiché dans l'application de navigateur, le contenu non autorisé étant obtenu à partir d'un emplacement de réseau différent de l'emplacement de réseau donné du contenu primaire.

6. Procédé selon l'une quelconque des revendications précédentes, la détermination du fait que l'extension de navigateur est une extension de navigateur malveillante comprenant l'étape consistant à déterminer que l'extension de navigateur bloque l'affichage du contenu autorisé obtenu par le dispositif informatique pour affichage par l'application de navigateur, le contenu autorisé étant un des contenus primaires inclus dans une page web donnée demandée par l'application de navigateur ou un contenu tiers (110) qui est demandé par l'application de navigateur par l'exécution du code de la page web donnée.

7. Procédé selon l'une quelconque des revendications précédentes, la détermination du fait que l'extension de navigateur est une extension de navigateur malveillante comprenant l'étape consistant à déterminer que l'extension de navigateur est une extension de barre de recherche de quatrième partie qui affiche une barre de recherche dans le cadre de l'affichage de l'application de navigateur.

8. Procédé selon l'une quelconque des revendications précédentes, la détermination du fait que l'extension de navigateur est une extension de navigateur malveillante comprenant l'étape consistant à déterminer que l'extension de navigateur communique avec des serveurs extérieurs indépendamment d'une demande de l'utilisateur ou par l'exécution du code inclus dans une page web donnée qui a été demandée par l'utilisateur pour de telles communications.

9. Dispositif informatique, comprenant :
une mémoire stockant des données et des instructions ; et
au moins un processeur qui exécute des instructions stockées sur la mémoire, les instructions amenant l'au moins un processeur à exécuter un gestionnaire d'extension qui est conçu pour exécuter un procédé selon l'une quelconque des revendications précédentes.

10. Support de stockage informatique codé avec un programme informatique, le programme comprenant des instructions qui, lorsqu'elles sont exécutées par un dispositif de traitement de données, amènent le dispositif de traitement de données à effectuer des opérations comprenant un procédé selon l'une quelconque des revendications 1 à 8.
